# EUROPEAN PATENT SPECIFICATION

(11) **EP 1 616 728 B1**
(45) Date of publication and mention of the grant of the patent: **12.03.2008**
(21) Application number: 05254429.3
(22) Date of filing: 15.07.2005
(51) Int. Cl.: B60D 1/62

(54) **A connector**
Steckverbinder
Connecteur

(30) Priority: 15.07.2004 GB 0415795
(43) Date of publication of application: 18.01.2006
(73) Proprietor: T Baden Hardstaff Limited, Kingston-on-Soar, Nottingham NG11 0DF (GB)
(72) Inventor: Storrar, Stephen David, Derby DE72 2BA (GB)
(74) Representative: Johnstone, Helen Margaret

(56) References cited:
- DE-U- 1 793 338
- GB-A- 2 365 397
- US-A- 2 170 557
- US-A- 2 733 033
- US-A- 2 978 217
- US-A- 6 095 181

## Description

This invention relates to a connector for connecting two or more service lines together, and particularly, but not exclusively, to a connector for connecting a service line on a tractor to a service line on a trailer, the tractor and trailer together forming an articulated vehicle.

The term service line as used herein means a cable, pipe or other conduit for carrying and transmitting a commodity such as electricity, water, pressurised air or other gases etc.

An articulated vehicle comprises an engine, or other power source for providing power to the vehicle, which engine is generally positioned on the tractor.

It is necessary to ensure that the trailer is supplied with pressurised air, electricity and other services in order to operate brakes, lights and other fittings on the trailer.

It can also be necessary to supply the tractor with, for example, compressed gas, if the engine is designed to run on compressed gas. Under such circumstances the compressed gas can be stored on the trailer, and it is necessary to have a service line running from the trailer to the tractor.

A known articulated vehicle comprises, for example, two compressed air lines, one for a service brake, and one for an emergency brake, and three electricity lines for providing power to, for example, brakes, lights and other accessories fitted to, or positioned on the trailer.

Because the tractor and trailer are disengageable it is not possible to have continuous service lines extending from the tractor to the trailer.

It is known to form each of the trailer and the tractor with an appropriate number of service lines. Each service line formed in the tractor is connected with a corresponding service line in the trailer by means of a cable which is attachable to sockets in each of the tractor and trailer.

The sockets attached to a particular service line may have predetermined dimensions that are different to the dimensions of other sockets attached to other service lines. This reduces the possibility that a service line in the tractor will be connected to the wrong line in the trailer, or *vice versa.*

It is known for each service line to have a predetermined cable associated with it. In order to ensure that an appropriate cable is connected to each service line, each cable comprises a plug at each end of the cable, which plug is shaped to fit into a predetermined socket.

The distance between the sockets on the tractor, and those on the trailer will vary depending on the angle of the tractor relative to the trailer. When the vehicle turns a corner, the distance between tractor sockets and trailer sockets will increase or decrease, due to relative movement of the tractor and trailer.

In order to allow for these changes, the cables connecting the tractor sockets to the trailer sockets comprise coiled cables known as suzies.

The coiled length of the cables is sufficient to connect service lines on the tractor and trailer when the distance between sockets is a minimum. When the distance increases, the cables uncoil as necessary to allow for the increased distance between sockets.

A known problem with existing suzies is that, under certain circumstances, when an articulated vehicle makes a tight turn, suzies can become tangled or damaged when parts of the trailer contact them.

Another problem is that the suzies can, through use, become overstretched, resulting in deformation of coils and further tangling problems.

US patent No. 6,095,181 discloses a system in which hydraulic hoses are coupled between the tractor and trailer units of an articulated vehicle. The hoses are connected to each of the units by a swivel joint to permit the hydraulic hoses to swivel at the point of connection to the respective tractor and trailer units. The hydraulic hoses are individually, positioned within separators to separate the hydraulic hoses and position them in a predetermined manner relative to forming a hose bundle. Each of the hydraulic hoses supporting separators is positioned on a steel spring bow to control the shape of the hose bundle, with each of the spring bows terminating in a coil spring at the point of connection with the tractor and trailer units. A support frame retains the hose bundle in a predetermined position to provide vertical stability and a spiral plastic or rubber outer wrap encircles the hose bundle to protect and keep the bundle together.

According to a first aspect of the present invention there is provided a device for connecting a first service line having a first line connection means to a second service line having a second line connection means, the first and second line connection means lying in a connection plane the first service line connection means being located on a tractor, and the second service line connection means being located on a trailer, the trailer and the tractor being connectable to one another to form an articulated vehicle;
a connector connectable to the first line connection means, and the second line connection means; and
a connector support for supporting the connector, the connector support being movable between a first position and a second position, wherein, in the first position the connector support extends in a direction substantially perpendicular to the connection plane,
characterised in that the connector support comprises a first support portion attachable to the tractor which first support portion comprises first attachment means for moveably attaching the first support portion to the tractor, which attachment means comprises first biasing means for biasing the first support portion in the first position.

According to a second aspect of the present invention there is provided a method for connecting a first service line located on a tractor and having a first line connection means, to a second service line located on a trailer and having a second line connection means the tractor and the trailer being connectable to one another to form an articulated vehicle, the first and second line connection means lying a connection plane, the method comprising the steps of:
connecting a connector between the first line connection means and the second line connection means;
attaching the connector to a connector support, the connector support comprising a first support portion comprising first attachment means for moveably attaching the first support portion to the tractor, which attachment means comprises first biasing means for biasing the first support portion in the first position, the connector support being moveable between a first position and a second position, wherein, in the first position the connector extends in a direction substantially perpendicular to the connection plane.

The connection plane is conveniently substantially horizontal, and the connector support extends substantially vertically in the first position.

Advantageously, in the second position, the cable support extends in a direction extending parallel to, or at an acute angle to the connection plane.

Preferably, the first service line connection means is located on a trailer, and the second service line connection means is located on a tractor, the trailer and the tractor being connectable to one another to form an articulated vehicle.

It is known that the distance between the tractor and the trailer will vary depending on whether the vehicle is turning or has turned, and the extent of any turn being negotiated.

When the distance between the tractor and trailer is at a minimum, the connector support is positioned in the first position and thus is substantially vertical.

When the distance between a first line connection and a second line connection increases due to relative movement of the tractor and trailer, a force is applied to the connector, which force causes the connector support to move towards the second position As the cable support moves from a substantially vertical position towards a horizontal position, the initially vertical length of the connector moves towards the horizontal, and thus increases the horizontal length of the connector.

By means of the present invention, therefore, a connector having an appropriate length to connect a first line connection means to a second line connection means may be supported in such a way that when the distance between the first line connection means and the second line connection means is at a minimum, excess length in the connector is supported in a substantially vertical position by the connector support.

This means, for example, that it is not necessary to use coiled connectors or suzies, and thus the disadvantages of such connectors as mentioned hereinabove are reduced or overcome.

Preferably the device further comprises a second support portion attachable to the trailer.

The first and second support portions enable an elongate connector in the form of, for example, a cable or pipe to be supported along two portions of the connector.

When the connector support comprises a first and second support portion, each of the first and second support portions will be positioned substantially perpendicular to the connection plane in the first position.

Conveniently, the second support portion comprises second attachment means for moveably attaching the second support portion to the trailer, which second attachment means comprises second biasing means for biasing the second support portion in the first position.

Each of the first and second support portions may be either permanently or removeably attached to the vehicle.

In use, when an articulated vehicle negotiates a turn, the distance between the tractor and the trailer will vary. When the distance increases, force will be applied to the first and/or second support portions which will result in one or both of the first and second support portions moving from the first position towards the second position.

This movement of the connector support means that an originally vertical length of the connector support moves towards a horizontal position in order to accommodate the increased length between the tractor and trailer.

The first and second biasing means cause the connector support to return the first position once the turn has been completed.

The first and second biasing means may take any convenient form and may comprise, for example, internal return springs, external return springs, or a hydraulic mechanism.

Advantageously, the connector support comprises a retainer for retaining the connector on the connector support, the retainer comprising receiving means for receiving the connector, such that the connector is moveable relative to the connector support.

Advantageously, the retainer allows the connector to move around the connector support in order to allow for articulation in the vehicle.

Advantageously, the device according to the present invention is for connecting a plurality of first service lines to a plurality of second service lines, the connector support being adapted to support a plurality of connectors, each connector connecting one of the plurality of first service lines to a predetermined one of the plurality of second service lines.

Advantageously, the receiving means is adapted to receive each of the plurality of connectors.

Alternatively, the connector support comprises a retainer for retaining the connector on the connector support, the retainer comprising a retaining portion for retaining the connector on the connector support, the retainer comprising receiving means for receiving the connector such that the connector is moveable relative to the connector support.

Preferably the connector support comprises a retainer for retaining the connector on the connector support, the retainer comprising a retaining portion for retaining the connector on the connector support, and a connecting portion for connecting the retainer to the connector, the connecting portion being releasably attached to the connector.

Preferably, the retainer comprises a breakable clip fastened to the connector support.

In an embodiment of the invention in which the device is for connecting a plurality of first service lines to a plurality of second service lines, the retainer is adapted to retain each of the plurality of connectors.

The connector or connectors may take any convenient form appropriate for the service carried in the service line. For example, the connectors may comprise cables or pipes.

Any number of first service lines may be connected by means of the present invention to any number of second service lines.

Typically the service lines will comprise, for example, air, electricity and gas supplies.

The service lines may also include lines for carrying a liquid that may be heated on a tractor unit of an articulated vehicle, and then transferred to the trailer of the articulated vehicle along one or more lines.

The liquid may be heated on the tractor unit, and the transfer of the heated liquid may be assisted by means of pump.

The device according to the present invention may further comprise secondary biasing means for biasing the connector support in the first position.

The secondary biasing means may comprise any convenient mechanism such as a return spring mounted externally of the device, an elasticated bungee cord, a retractable lanyard or any other suitable device.

When the connector support comprises a first connector portion and second connector portion, the device may comprise a first secondary biasing means and a second secondary biasing means.

The secondary biasing means may be useful when the connector support is supporting a large number of service lines, or lines that are relatively heavy.

The invention will now be further described by way of example only with reference to the accompanying drawings in which:
Figures 1a and 1b illustrate known connectors for connecting supply lines in a tractor to supply lines in a trailer;
Figure 2 is a schematic representation of a connector according to the present invention;
Figure 3 is a schematic representation of the connector in Figure 2 showing the position of the connector in an articulated vehicle;
Figures 4a, 4b, 5 and 6 illustrate embodiments of an attachment forming part of the connector according to the present invention;
Figures 7a to 7d are schematic plan representations showing movement of the connector of Figure 2 in different relative positions of the tractor and trailer;
Figures 8, 9a, 9b and 9c illustrate a support forming part of the present invention comprising a flexible portion;
Figure 10 is a schematic representation of the connector of Figure 2 showing how individual pipes and cables are carried;
Figure 11 is a schematic representation of the connector of Figure 2 incorporating a breakaway coupling attached to the gas supply;
Figures 12a and 12b are schematic representations of a retainer for retaining various pipes and cables from the connector support forming part of the connector of Figure 2;
Figures 13 and 14 illustrate a second embodiment of a retainer;
Figure 15 is a schematic representation of the connector of Figure 2 showing a quick release device to allow removal of the device from the trailer; and
Figure 16 is a schematic representation of a secondary biasing means forming part of an embodiment of the present invention.

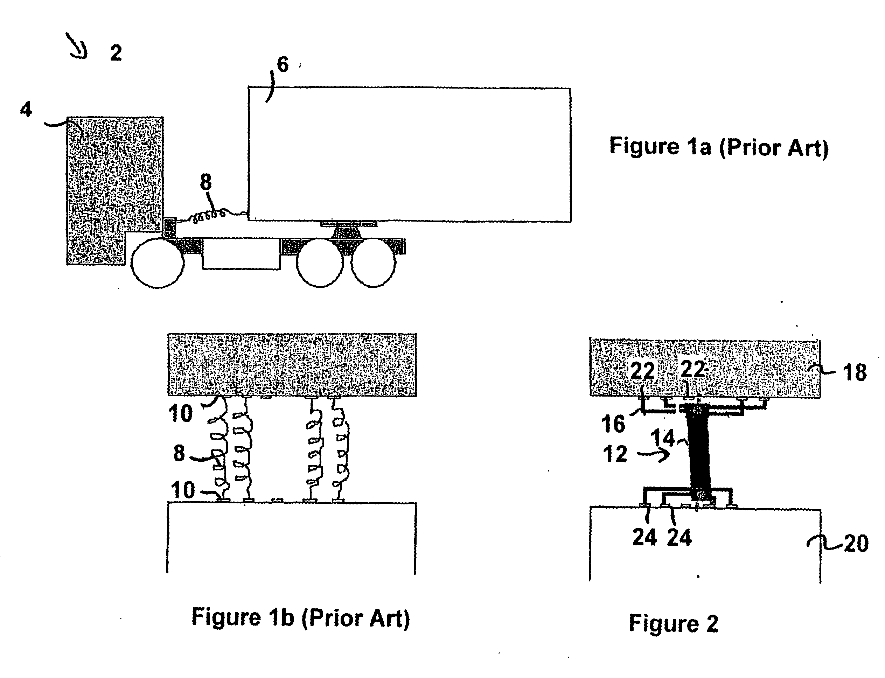

Referring to Figures 1a and 1b, a known method of connecting supply lines in a tractor and trailer forming part of an articulated vehicle is shown. The articulated vehicle 2 comprises a tractor 4 and a trailer 6. In order to connect a supply line in the trailer to a supply line in the tractor, a coiled cable known as a suzie 8 is used. A separate suzie is used to connect each of a plurality of supply lines as shown particularly in Figure 1b. Each suzie is connectable to a socket 10 in the tractor and trailer. Because the cables are coiled, changes in the distance between sockets in the tractor and the sockets in the trailer can be accommodated through stretching of the suzies 8.

Turning now to Figures 2 to 16, embodiments of the present invention will now be described in detail by way of example only.

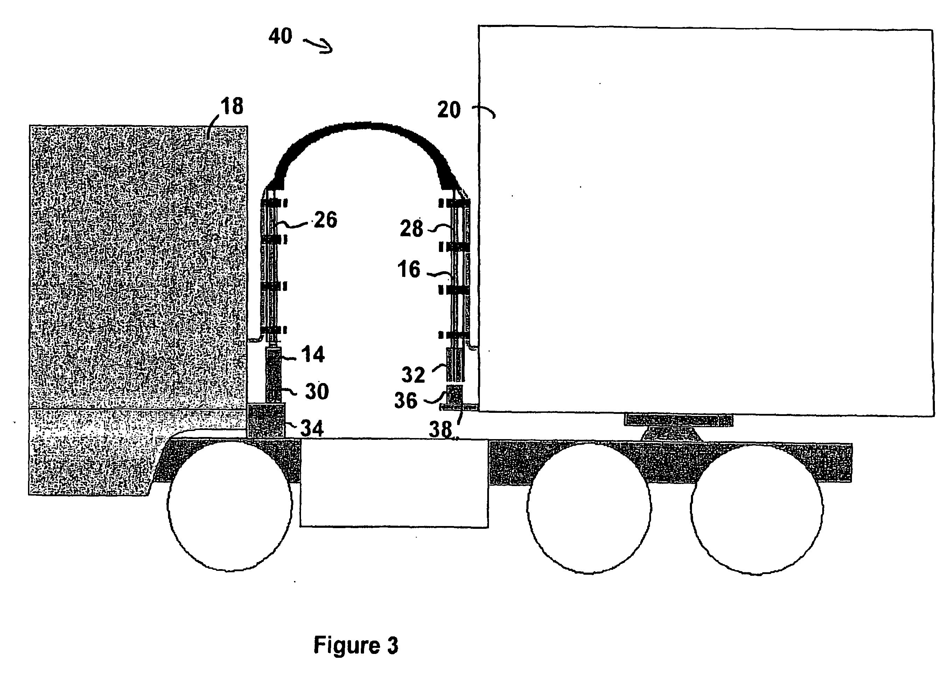

Referring initially to Figures 2 and 3, a connector according to the present invention is designated generally by the reference numeral 12. The connector comprises a connector support 14 for supporting connectors 16. The connectors are each adapted to connect a service line in a tractor 18 with a corresponding service line in a trailer 20. The tractor and trailer together form an articulated vehicle 40 and are thus detachable from one another. The tractor is pivotally connected to the trailer.

The tractor comprises sockets 22, and the trailer comprises corresponding sockets 24. Each connector 16 is connectable to predetermined sockets 22, 24 in order to connect a supply line in the tractor with the appropriate supply line in the trailer.

The number of connectors will depend upon the number of service lines present in the tractor and trailer, and in some cases there may be a single connector 16 only. However, in most cases there will be a plurality of connectors that will be carried by the connector support 14.

The connector support in the illustrated embodiment comprises a first support portion 26 mounted on the tractor 18, and a second support portion 28 mounted on the trailer. The first support portion 26 is moveably mounted on the tractor by means of attachment 30, and the second support portion is moveably mounted on the trailer by means of an attachment 32. The attachments 30, 32 may take any convenient form, for example, a spring.

Conveniently, each of the tractor and trailer comprises a mounting 34, 36 comprising a post 38. The attachments 30, 32 are shaped to fit around a respective post 36 in order to allow for easy attachment of the connector support 14 to the articulated vehicle 40.

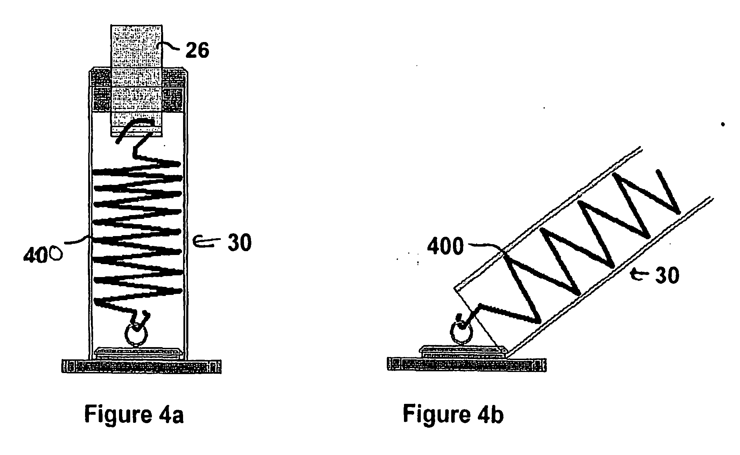

Referring to Figures 4a, 4b, 5 and 6 different embodiments of the attachment 30 are illustrated. In each of Figures 4a to 6, the attachment is referred to by the reference numeral 30, although the embodiments shown in Figures 4a to 6 could also represent attachment 32.

Referring to Figure 4a, it can be seen that the attachment means 30 comprises biasing means in the form of an internal spring type support 400 which allows the support 26 to move from a substantially vertical position to a substantially horizontal position, and then to return to the vertical position once the forces causing the support to move towards the vertical position have ceased acting as shown in Figure 4b. As the support 26 moves towards the horizontal position, the spring 400 is stretched. This causes tension in the spring which aids in the subsequent uprighting of the support 26.

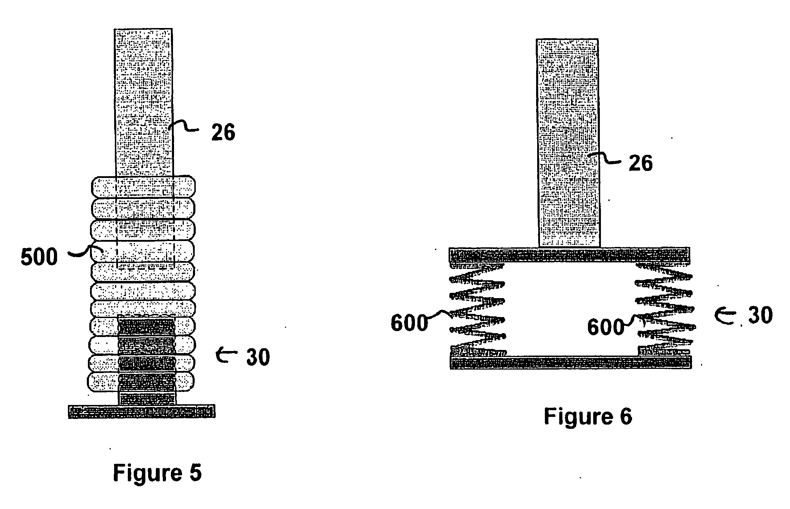

Turning now to Figure 5, a second embodiment of the attachment 30 is shown. In Figure 5, the attachment 30 comprises biasing means in the form of an external spring 500.

In Figure 6 a third embodiment of the attachment 30 is shown comprising biasing means in the form of a pair of springs 600. The springs 600 are positioned so that when the support 26 moves from a substantially horizontal position towards a vertical position, one spring will become compressed and one will be in tension.

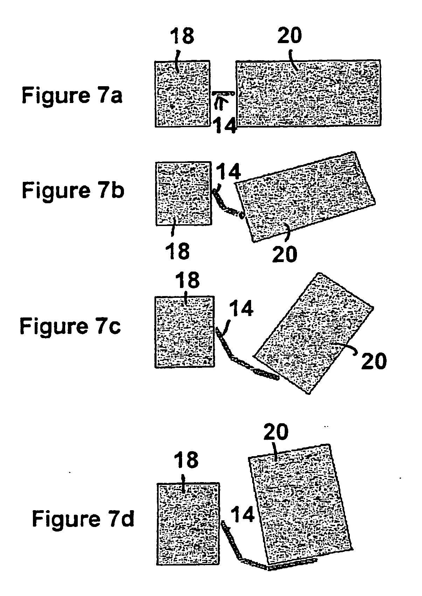

The distance between tractor sockets 22 and trailer sockets 24 will vary according to the relative position of the tractor 18 and the trailer 20, as shown schematically in Figures 7a to 7d. When the tractor and trailer are in the position shown in Figure 7a, the distance between the tractor sockets 22 and the trailer sockets 24 will be at a minimum, and the connector support 14 will be in the position shown in Figures 3 and 7a in which the first and second support portions 26, 28 extend in a substantially vertical direction.

When the tractor 18 moves relative to the trailer 20, as shown in Figures 7b to 7d, the distance between the tractor sockets 22 and the trailer sockets 24 will increase. This will result in a force being exerted on one or both of the support portions 26, 28. This results in one or both of the support portions 26, 28 moving towards a second position in which one or both of the support portions lies in a plane close to, or parallel to the plane in which the tractor sockets and trailer sockets lie.

If not all of the tractor sockets and trailer sockets lie in the same plane, then, when the support portions lie in the second position, they will lie in a plane close to or parallel to a plane in which at least one tractor socket and one trailer socket lies. In this embodiment, the plane in which the tractor sockets and trailer sockets lie is substantially horizontal.

As one or both of the support portions moves from a vertical position towards the horizontal position, the horizontal component of the length of the support portions 26, 28 will increase in response to the distance between tractor sockets 22 and trailer sockets 24 increasing.

In Figure 7a, both of the first and second support portions 26, 28 are substantially vertical, and are therefore not visible in a plan view.

In Figure 7b, movement of the tractor 18 relative to the trailer 20 results in the first support portion 26 moving away from the first position and towards the second position.

In Figure 7c, the further relative movement of the tractor and trailer 18, 20 results in further movement of the first support portion away from the first position and towards the second position, and additionally movement of the second support portion 28 from the first position towards the second position.

In Figure 7d, the further relative movement of the tractor 18 and the trailer 20 results in both the first support portion and the second support portion assuming a substantially horizontal position.

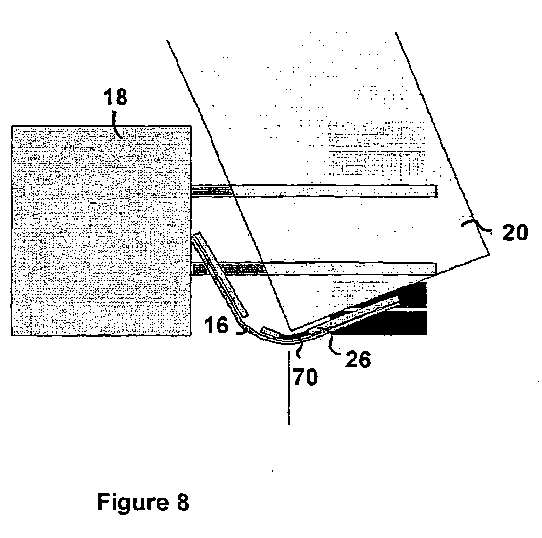

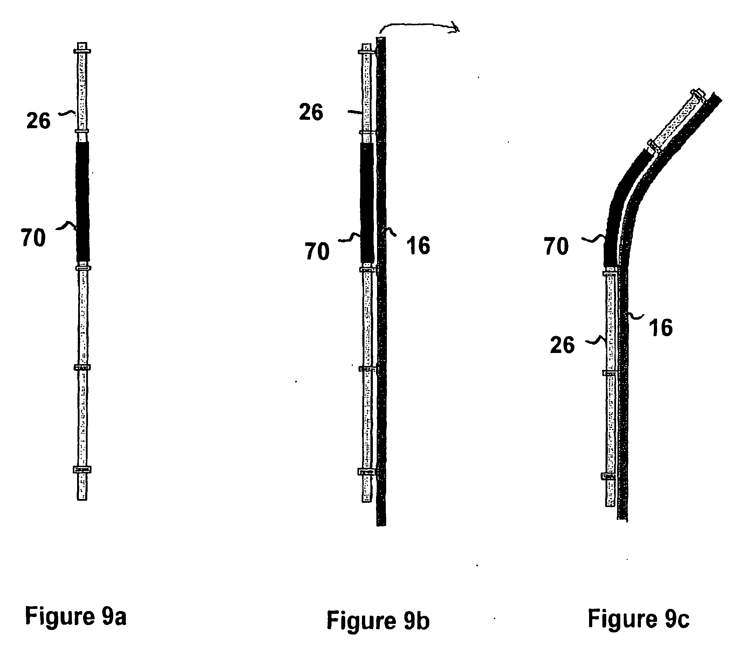

In certain embodiments of the present invention, one or both of the first and second support portions 26, 28 may comprise a flexible portion 70 as illustrated in Figures 8 and 9a to 9c. This means that, during extreme articulation of the tractor and the trailer 18, 20 one or both of the supports 26, 28 is able to bend around the front of the trailer whilst still maintaining support for the connectors 16.

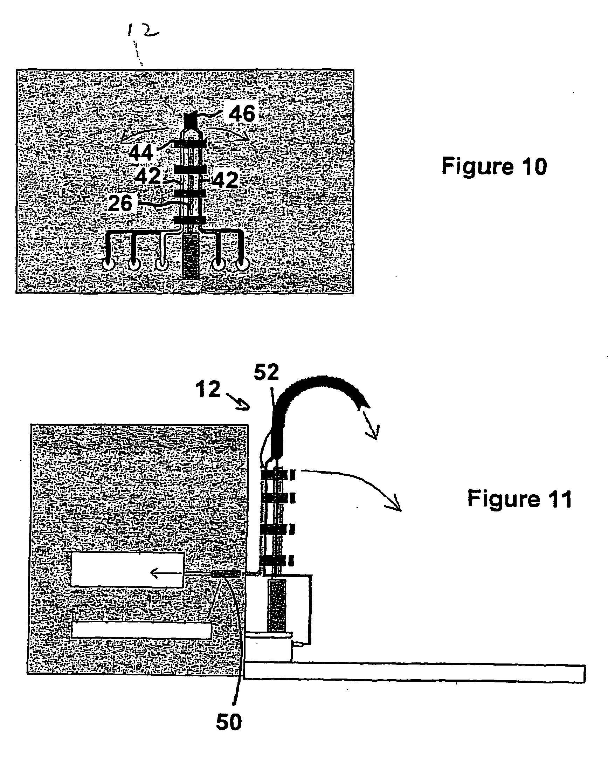

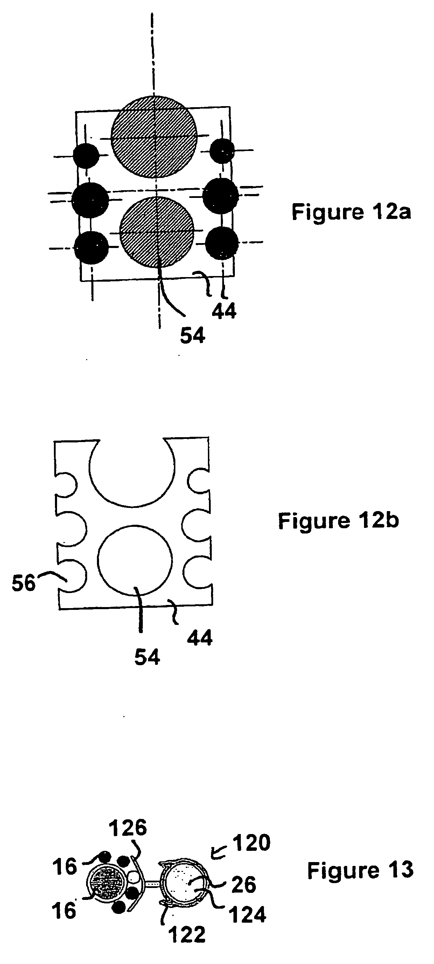

Turning now to Figure 10, a connector 12 according to the present invention is shown in more detail. Figure 10 shows schematically the first support portion 26 in a substantially vertical position. The first support portion 26 carries a plurality of pipes and cables (in this case, five) in order to connect supply lines formed in the tractor 18 and trailer 20. The individual pipes and cables 42 are retained on the first support portion 26 by means of retainers 44 shown in more detail in Figures 12a, 12b and 13. The individual pipes and cables 42 are held together in a conduit 46 in order to reduce the number of potentially trailing pipes and cables extending between the first support portion 26 and the second support portion 28.

The conduit also provides support to the cables and pipes along the length of the cables and pipes not supported by the first and second support portions 26, 28.

The pipes and cables 42 are adapted to fit into plugs and sockets 48 formed in the tractor 18. Such plugs and sockets are routinely fitted to articulated vehicles and have previously been used with the known suzies mentioned hereinabove. This means that the present invention is able to make use of features which are usually standard in articulated vehicles.

In Figure 11, a connector according to the present invention is shown, connecting a gas supply line from the trailer 20 to the tractor 18. In vehicles in which the engine runs on gas or diesel and gas, it is desirable to house the gas reservoir on the trailer, and supply gas to the engine which is located in the tractor.

In order to prevent or reduce the chances of uncontrolled emission of gas in situations when, for example, the tractor 18 is inadvertently disengaged from the trailer 20 but the connectors 16 have not been so disengaged, the connector 12 comprises a breakaway coupling 50 attached to a pipe 52. The pipe 52 is significantly shorter than pipes/cables connecting other service lines.

In the event of accidental trailer decoupling, the first support portion 28 would be pulled away from the tractor. Because the pipe connecting the gas supply lines to one another is shorter than the other connectors, the breakaway coupling will decouple before any other damage to the other connectors has occurred.

In an alternative embodiment, the connector carrying the gas is significantly longer than the other connectors and therefore is the last connector that would become decoupled in the event of accidental trailer decoupling.

Referring now to Figure 12a and 12b, a retainer 44 is shown in more detail. The retainer is shaped to receive each of the pipes/cables that are required to connector supply lines on the tractor and trailer.

The retainer 44 comprises a first aperture 54 for receiving either the first or second support portions as appropriate. Once the retainer has been positioned on a support portion, connectors may be inserted into the open apertures 56 as appropriate. The retainer is sized and shaped so that it may move radially around the support portion to which it is attached thus allowing relative movement of the connectors 16 to the support portion 26 or 28.

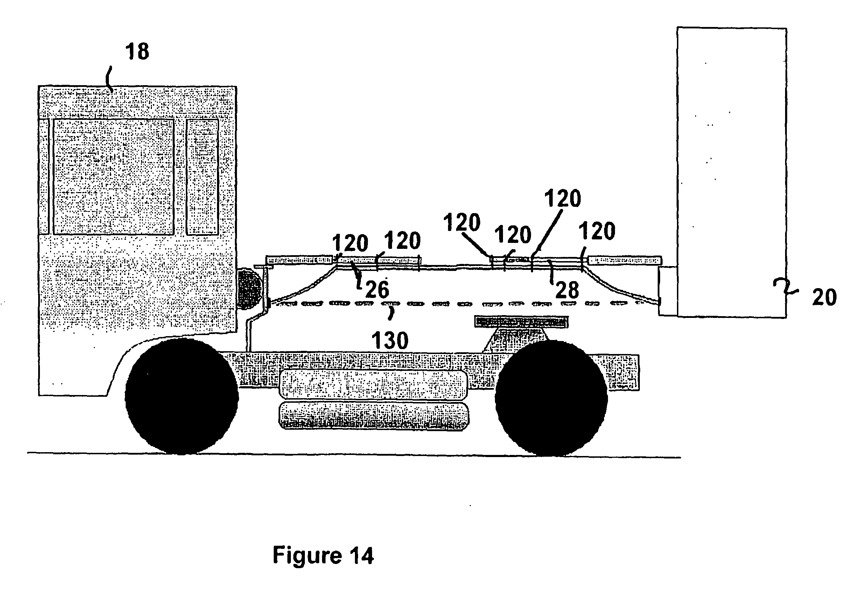

Referring to Figures 13 and 14, a second embodiment of a retainer is illustrated and is designated generally by the reference numeral 120. The retainer 120 comprises a breakable clip 122 defining a first aperture 124 for receiving either the first or the second support portions 24, 26 as appropriate. The retainer further comprises a support bracket 126 secured to the breakable clip 122, to which are attached the connectors 16.

Turning now to Figure 14, an articulated vehicle incorporating the retaining means 120 is shown. The retainer 120 serves to attach connectors 16 to the support portions 26, 28.

In the event of a separation of the trailer 20 from the tractor 18 without prior disconnection of the connectors 16, the support portions 26, 28 will be pulled into a substantially horizontal position as shown in Figure 14. The breakable clips 122 forming the retainers 120 will then fail, allowing the service lines to be pulled into a substantially horizontal position indicated by the dotted line 130.

In an embodiment where there is a breakaway coupling attaching a gas line to the trailer, this results in the gas line being presented to the breakaway coupling in a substantially horizontal position. This reduces the chance of the breakaway coupling malfunctioning, and increases the chances of the coupling failing in the designed manner.

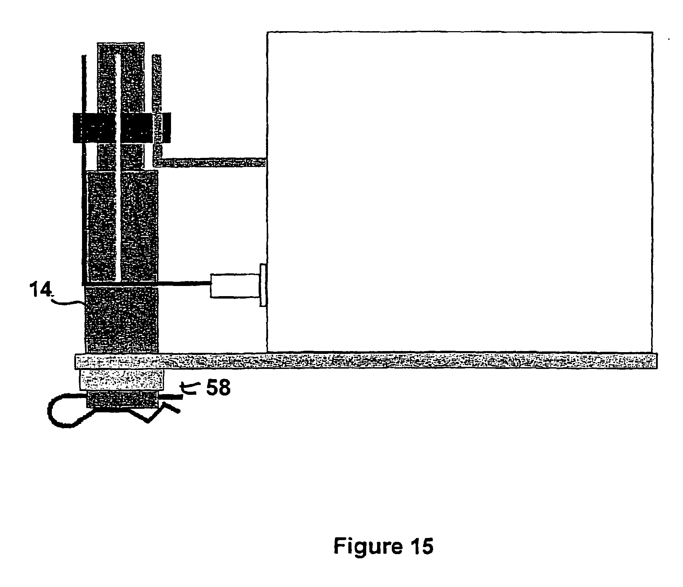

Referring to Figure 15, a connector according to the present invention is shown including a quick release device 58 for allowing removal of the connector according to the present invention from the trailer for stowage on the tractor when not in use.

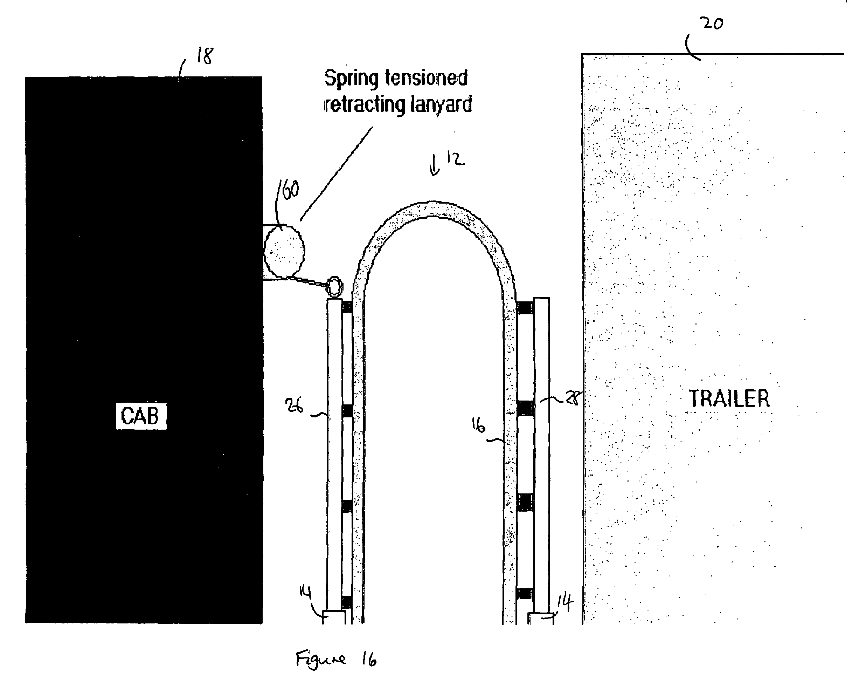

Referring to Figure 16, a further embodiment of the invention is shown. Parts of the embodiment of the invention shown in Figure 16 corresponding to parts in any of Figures 2 to 15 have been given corresponding reference numerals for ease of reference.

The connector 12 illustrated in Figure 16 comprises a secondary biasing means 160 for biasing the connector support 14 in a first position, which in this example, is one in which the connector support 14 is in a substantially horizontal position. The secondary biasing means 160 may be used instead of or in conjunction with first and second biasing means described hereinabove with reference to Figures 2 to 15. The secondary biasing means is particularly useful when the connector support is supporting a large number of service lines or lines that are relatively heavy.

## Claims

1. A device (12) for connecting a first service line having a first line connection means (22) to a second service line having a second line connection means (24), the first and second line connection means lying in a connection plane the first service line connection means being located on a tractor (28), and the second service line connection means being located on a trailer, the trailer and the tractor being connectable to one another to form an articulated vehicle (40);
a connector connectable to the first line connection means and to the second line connection means; and
a connector support for supporting the connector, the connector support being movable between a first position and a second position, wherein, in the first position the connector support extends in a direction substantially perpendicular to the connection plane,
**characterised in that** the connector support comprises a first support portion (26) attachable to the tractor which first support portion comprises first attachment means (30) for moveably attaching the first support portion (26) to the tractor, which attachment means comprises first biasing means (400) for biasing the first support portion (26) in the first position.

2. A device (12) according to Claim 1, wherein the connection plane is substantially horizontal, and the connector support (14) extends substantially vertically in the first position.

3. A device according to any one of the preceding claims wherein, in the second position, the connector support extends in a direction extending parallel to, or at an acute angle to the connection plane.

4. A device (12) according to any one of the preceding claims, wherein the connector support (14) comprises a second support portion (28) attachable to the trailer.

5. A device (12) according to any one of the preceding claims, wherein the second support portion (28) comprises second attachment means (32) for moveably attaching the second support portion to the trailer, which second attachment means comprises second biasing means (400) for biasing the second support portion in the first position.

6. A device (12) according to any one of the preceding claims, wherein the first support portion (26) is permanently attached to the tractor.

7. A device (12) according to Claim 5 or Claim 6 when dependent upon Claim 5, wherein the second support portion (28) is permanently attached to the trailer.

8. A device (12) according to any one of the preceding claims wherein the connector support (14) comprises a retainer (44) for retaining the connector on the connector support, the retainer comprising receiving means for receiving the connector, such that the connector is moveable relative to the connector support.

9. A device (12) according to any one of Claims 1 to 7, wherein the connector support comprises a retainer for retaining (44) the connector on the connector support, the retainer comprising a retaining portion for retaining the connector on the connector support, and a connecting portion for connecting the retainer to the connector, the connecting portion being releasably attached to the connector.

10. A device (12) according to Claim 9, wherein the connecting portion of the retainer comprises a breakable clip (122) fastened to the connector support.

11. A device (12) according to any one of the preceding claims, for connecting a plurality of first service lines to a plurality of second service lines, the connector support being adapted to support a plurality of connectors (16), each connector connecting one of the plurality of first service lines to a predetermined one of the plurality of second lines, one or more of the first and second lines lying in a connection plane.

12. A device (12) according to Claim 11 when dependent on Claim 8, or any claim dependent thereon, wherein the receiving means is for receiving each of the plurality of connectors.

13. A device (12) according to Claim 11 and dependent upon Claim 9 or Claim 10 or any claim dependent thereon, wherein the retaining portion is adapted to retain each of the plurality of connectors.

14. A device (12) according to any one of the preceding claims wherein the connector support (14) comprises a flexible portion.

15. A device (12) according to any one of the preceding claims further comprising secondary biasing means (160) for biasing the connector support in the first position.

16. A method for connecting a first service line located on a tractor (18) and having a first line connection means, to a second service line located on a trailer (20) and having a second line connection means the tractor and the trailer being connectable to one another to form an articulated vehicle (40), the first and second line connection means lying a connection plane, the method comprising the steps of:
connecting a connector (16) between the first line connection means and the second line connection means;
attaching the connector (16) to a connector support (14), the connector support comprising a first support portion (16) comprising first attachment means (30) for moveably attaching the first support portion to the tractor, which attachment means comprises first biasing means (400) for biasing the first support portion in the first portion, the connector support being moveable between a first position and a second position, wherein, in the first position the connector extends in a direction substantially perpendicular to the connection plane.

17. An articulated vehicle comprising a device according to any one of Claims 1 to 15.

## Patentansprüche

1. Vorrichtung (12) zum Verbinden einer ersten Betriebsleitung, die ein erstes Leitungsverbindungsmittel (22) aufweist, mit einer zweiten Betriebsleitung, die ein zweites Leitungsverbindungsmittel (24) aufweist, wobei die ersten und zweiten Leitungsverbindungsmittel in einer Verbindungsebene liegen, das ersten Betriebsleitungsverbindungsmittel sich an einer Zugmaschine (28) befindet und das zweite Betriebsleitungsverbindungsmittel sich an einem Anhänger befindet, wobei der Anhänger und die Zugmaschine miteinander verbindbar sind, um ein gelenkig verbundenes Fahrzeug (40) zu bilden,
mit einem Verbinder, der mit dem ersten Leitungsverbindungsmittel und dem zweiten Leitungsvexbzndungsmittel verbindbar ist, und
einer Verbinderhalterung zum Haltern des Verbinders, wobei die Verbinderhalterung zwischen einer ersten Position und einer zweiten Position bewegbar ist, wobei sich die Verbinderhalterung in der ersten Position in einer zur Verbindungsebene im wesentlichen senkrechten Richtung erstreckt,
**dadurch gekennzeichnet, dass** die Verbinderhalterung einen ersten Halterungsabschnitt (26) auf weist, der an der Zugmaschine anbringbar ist, wobei der erste Halterungsabschnitt erste Befestigungsmittel (30) zum beweglichen Anbringen des ersten Halterungsabschnitts (26) an der Zugmaschine umfasst, und das Befestigungsmittel ein erstes Vorbelastungsmittel (400) zum Vorbelasten des ersten Halterungsabschnitts (26) in der ersten Position umfasst.

2. Vorrichtung (12) nach Anspruch 1, wobei die Verbindungsebene im wesentlichen horizontal ist und die Verbinderhalterung (14) sich in der ersten Position im wesentlichen vertikal erstreckt.

3. Vorrichtung nach einem der vorangehenden Ansprüche,
wobei sich die Verbinderhalterung in der zweiten Position in einer Richtung erstreckt, die parallel oder unter einem spitzen Winke7: zu der Verbindungsebene verläuft.

4. Vorrichtung (12) nach einem der vorangehenden Ansprüche,
wobei die Verbinderhalterung (14) einen zweiten Halterungsabschnitt (28) aufweist, der an dem Anhänger anbringbar ist.

5. Vorrichtung (12) nach einem der vorangehenden Ansprüche,
wobei der zweite Halterungsabschnitt (28) zweite Befestigungsmittel (32) zum beweglichen Anbringen, und das zweite Befestigungsmittel zweite Vorbelastungsmittel (400) zum Vorbelasten des zweiten Halterungsabschnitts in der ersten Position umfasst.

6. Vorrichtung (12) nach einem der vorangehenden Ansprüche,
wobei der erste Halterungsabschnitt (26) permanent an der Zugmaschine befestigt ist.

7. Vorrichtung (12) nach Anspruch 5 oder Anspruch 6, wenn dieser von Anspruch 5 abhängt, wobei der zweite Halterungsabschnitt (28) permanent an dem Anhänger angebracht ist.

8. Vorrichtung (12) nach einem der vorangehenden Ansprüche,
wobei die Verbinderhalterung (14) ein Festhalteelement (44) zum Festhalten des Verbinders an der Verbinderhalterung aufweist und das Festhalteelement Aufnahmemittel zum Aufnehmen des Verbinders umfasst, so dass der Verbinder in bezug auf die Verbinderhalterung beweglich ist.

9. Vorrichtung (12) nach einem der Ansprüche 1 bis 7, wobei die Verbinderhalterung ein Festhalteelement (44) zum Festhalten des Verbinders an der Verbinderhalterung, und das Festhalteelement einen Festhalteabschnitt zum Festhalten des Verbinders an der Verbinderhalterung aufweist, und einen Verbindungsabschnitt zum Verbinden des Festhaltelements mit dem Verbinder umfasst, wobei der Verbindungsabschnitt lösbar an dem Verbinder angebracht ist.

10. Vorrichtung (12) nach Anspruch 9, wobei der Verbindungsabschnitt des Festhalteelements einen an der Verbinderhalterung befestigten zerbrechbaren Clip (122) aufweist.

11. Vorrichtung (12) nach einem der vorangehenden Ansprüche zum Verbinden mehrerer erster Betriebsleitungen mit mehreren zweiten Betriebsleitungen, wobei die Verbinderhalterung mehrere Verbinder (16) haltern kann, jeder Verbinder eine der mehreren ersten Betriebsleitungen mit einer vorbestimmten Leitung der mehreren zweiten Leitungen verbindet, und eine oder mehrere der ersten und zweiten Leitungen in einer Verbindungsebene liegen.

12. Vorrichtung (12) nach Anspruch 11, wenn dieser von Anspruch 8 oder irgendeinem hiervon abhängigen Anspruch abhängt, wobei das Aufnahmemittel zum Aufnehmen jedes der mehreren Verbinder dient.

13. Vorrichtung (12) nach Anspruch 11 und abhängig von Anspruch 9 oder 10 oder irgendeinem hiervon abhängigen Anspruch, wobei der Festhalteabschnitt jeden der mehreren Verbinder festhalten kann.

14. Vorrichtung (12) nach einem der vorangehenden Ansprüche,
wobei die Verbinderhalterung (14) einen flexiblen Abschnitt aufweist.

15. Vorrichtung (12) nach einem der vorangehenden Ansprüche, ferner mit Sekundär-Vorbelastungsmitteln (160) zum Vorbelasten der Verbinderhalterung in der ersten Position.

16. Verfahren zum Verbinden einer ersten Betriebsleitung, die sich an einer Zugmaschine (18) befindet und ein erstes Leitungsverbindungsmittel aufweist, mit einer zweiten Betriebsleitung, die sich an einem Anhänger (20) befindet und ein zweites Leitungsverbindungsmittel aufweist, wobei die Zugmaschine und der Anhänger miteinander verbindbar sind, um ein gelenkig verbundenes Fahrzeug (40) zu bilden, und das erste und zweite Leitungsverbindungsmittel in einer Verbindungsebene liegen, wobei das verfahren die folgenden Schritte umfasst:
Verbinden eines Verbinders (16) zwischen dem ersten Leitungsverbindungsmittel und dem zweiten Leitungsverbindungsmittel,
Anbringen des Verbinders (16) an einer Verbinderhalterung (14), wobei die Verbinderhalterung einen ersten Halterungsabschnitt (16) aufweist, der erste Befestigungsmittel (30) zum beweglichen Anbringen des ersten Halterungsabschnitts an der Zugmaschine umfasst, wobei das Befestigungsmittel erste Vorbelastungsmittel (400) zum Vorbelasten des ersten Halterungsabschnitts in dem ersten Abschnitt aufweist, wobei die Verbinderhalterung zwischen einer ersten Position und einer zweiten Position beweglich ist, und sich der verbinder in der ersten Position in einer Richtung erstreckt, die im wesentlichen senkrecht zu der Verbindungsebene ist.

17. Gelenkig verbundenes Fahrzeug mit einer Vorrichtung gemäß einem der Ansprüche 1 bis 15.

## Revendications

1. Dispositif (12) de connexion d'une première ligne de service comportant un premier moyen de connexion de ligne (22) à une seconde ligne de service comportant un second moyen de connexion de ligne (24), les premier et second moyens de connexion de ligne se trouvant dans un plan de connexion, le premier moyen de connexion de ligne de service étant placé sur un tracteur (28) et le second moyen de connexion de ligne de service étant placé sur une remorque, la remorque et le tracteur pouvant être raccordés l'un à l'autre pour former un véhicule articulé (40) ;
un connecteur destiné à être connecté au premier moyen de connexion de ligne et au second moyen de connexion de ligne; et
un support de connecteur destiné à supporter le connecteur, le support de connecteur étant amovible entre une première position et une seconde position, dans lequel, dans la première position, le support de connecteur s'étend dans une direction sensiblement perpendiculaire au plan de connexion,
**caractérisé en ce que** le support de connecteur comprend une première partie de support (26) pouvant être fixée au tracteur, cette première partie de support comprenant un premier moyen de fixation (30) pour fixer de façon amovible la première partie de support (26) au tracteur, lequel moyen de fixation comprend un premier moyen de sollicitation (400) pour solliciter la première partie de support (26) dans la première position.

2. Dispositif (12) selon la revendication 1, dans lequel le plan de connexion est sensiblement horizontal, et le support de connecteur (14) s'étend sensiblement à la verticale dans la première position.

3. Dispositif selon l'une quelconque des revendications précédentes dans lequel, dans la seconde position, le support de connecteur s'étend dans une direction parallèle ou à un angle aigu par rapport au plan de connexion.

4. Dispositif (12) selon l'une quelconque des revendications précédentes, dans lequel le support de connecteur (14) comprend une seconde partie de support (28) pouvant être fixée à la remorque.

5. Dispositif (12) selon l'une quelconque des revendications précédentes, dans lequel la seconde partie de support (28) comprend un second moyen de fixation (32) pour fixer de façon amovible la seconde partie de support à la remorque, ledit second moyen de fixation comprenant un second moyen de sollicitation (400) pour solliciter la seconde partie de support dans la première position.

6. Dispositif (12) selon l'une quelconque des revendications précédentes, dans lequel la première partie de support (26) est fixée de façon permanente au tracteur.

7. Dispositif (12) selon la revendication 5 ou la revendication 6 lorsque celle-ci dépend de la revendication 5, dans lequel la seconde partie de support (28) est fixée de façon permanente à la remorque.

8. Dispositif (12) selon l'une quelconque des revendications précédentes dans lequel le support de connecteur (14) comprend un dispositif de retenue (44) pour retenir le connecteur sur le support de connecteur, le dispositif de retenue comprenant un moyen de réception pour recevoir le connecteur, de telle sorte que le connecteur est amovible par rapport au support de connecteur.

9. Dispositif (12) selon l'une quelconque des revendications 1 à 7, dans lequel le support de connecteur comprend un dispositif de retenue pour retenir (44) le connecteur sur le support de connecteur, le dispositif de retenue comprenant une partie de retenue pour retenir le connecteur sur le support de connecteur., et une partie de raccordement pour raccorder le dispositif de retenue au connecteur, la partie de raccordement étant fixée de façon amovible au - connecteur.

10. Dispositif (12) selon la revendication 9, dans lequel la partie de raccordement du dispositif de retenue comprend une agrafe frangible (122) fixée au support de connecteur.

11. Dispositif (12) selon l'une quelconque des revendications précédentes, pour connecter une pluralité de premières lignes de service à une pluralité de secondes lignes de service, le support de connecteur étant adapté pour supporter une pluralité de connecteurs (16), chaque connecteur connectant une parmi la pluralité de premières lignes de service à une ligne prédéterminée parmi la pluralité de secondes lignes, une ou plusieurs des premières et secondes lignes se trouvant dans un plan de connexion.

12. Dispositif (12) selon la revendication 11 lorsque celle-ci dépend de la revendication 8, ou de l'une quelconque des revendications dépendant de cette dernière, dans lequel le moyen de réception est destiné à recevoir chacun de la pluralité de connecteurs.

13. Dispositif (12) selon la revendication Il et dépendant de la revendication 9 ou de la revendication 10 ou de l'une quelconque des revendications dépendant de ces dernières, dans lequel la partie de retenue est adaptée pour retenir chacun de la pluralité de connecteurs.

14. Dispositif (12) selon l'une quelconque des revendications précédentes dans lequel le support de connecteur (14) comprend une partie flexible.

15. Dispositif (12) selon l'une quelconque des revendications précédentes comprenant en outre un moyen de sollicitation secondaire (160) pour solliciter le support de connecteur dans la première position.

16. Procédé de connexion d'une première ligne de service placée sur un tracteur (18) et comportant' un premier moyen de connexion de ligne, à une seconde ligne de service placée sur une remorque (20) et comportant un second moyen de connexion de ligne, le tracteur et la remorque pouvant être raccordés l'un à l'autre pour former un véhicule articulé (40), le premier et le second moyens de connexion de ligne se trouvant dans un plan de connexion, ce procédé comprenant les étapes de :
connexion d'un connecteur (16) entre le premier moyen de connexion de ligne et le second moyen de connexion de ligne;
fixation du connecteur (16) à un support de connecteur (14), le support de connecteur comprenant une première partie de support (16) comprenant un premier moyen de fixation (30) pour fixer de façon amovible la première partie de support au tracteur, ledit moyen de fixation comprenant un premier moyen de sollicitation (400) pour solliciter la première partie de support dans la première position, le support de connecteur étant amovible entre une première position et une seconde position, dans lequel, dans la première position, le connecteur s'étend dans une direction sensiblement perpendiculaire au plan de connexion.

17. Véhicule articulé comprenant un dispositif selon l'une quelconque des revendications 1 à 15.
